# EUROPÄISCHE PATENTANMELDUNG

(11) **EP 4 759 448 A1**
(43) Veröffentlichungstag der Anmeldung: **17.06.2026**
(21) Anmeldenummer: 25222168.4
(22) Anmeldetag: 10.12.2025
(51) Int. Cl.: B08B 9/20, G01N 21/90, B08B 9/30, B08B 9/46

(54) **VERSCHMUTZUNGSGRADUNABHÄNGIGE REINIGUNG VON BEHÄLTNISSEN**

(30) Priorität: 12.12.2024 DE 102024137477
(71) Anmelder: Krones AG, 93073 Neutraubling (DE)
(72) Erfinder: Albrecht, Thomas, 93073 Neutraubling (DE)
(74) Vertreter: Hannke Bittner & Partner mbB Regensburg

(57) **Zusammenfassung**

Verfahren zum Reinigen von Behältnissen (10), wobei Behältnisse (10) mittels einer Transporteinrichtung (2) transportiert und einer Reinigungseinrichtung (4) zum Reinigen der Behältnisse zugeführt werden und diese Reinigungseinrichtung (6) die Behältnisse (10) insbesondere durch Beaufschlagung der Behältnisse mit einem fließfähigen Reinigungsmittel reinigt, dadurch gekennzeichnet, dass die zu reinigenden Behältnisse (10) inspiziert werden, und wenigstens ein erster Wert (V1, V2, V3) ermittelt wird, der für einen Verschmutzungsgrad eines inspizierten Behältnisses (10) oder einen Verschmutzungsgrad einer Gruppe von inspizierten Behältnissen charakteristisch ist und die Reinigungseinrichtung (6) die zu reinigenden Behältnisse (10) oder die zu reinigenden Gruppen von Behältnisse unter Berücksichtigung des ersten Wertes (V1, V2, V3) reinigt, wobei unterschiedlich verschmutzte Behältnisse (10) unterschiedlich gereinigt werden.

## Beschreibung

Die vorliegende Erfindung bezieht sich auf ein Verfahren und eine Vorrichtung zum Reinigen von Behältnissen sowie ein Verfahren und eine Vorrichtung zum Inspizieren von Behältnissen. In der getränkeherstellenden Industrie ist es bekannt, dass leere Behältnisse vor ihrer Wiederverwendung beispielsweise vor einer Wiederbefüllung gereinigt werden, um sie von Verunreinigungen vergangener Nutzungen zu befreien.

Dabei wird bei den aktuell auf dem Markt befindlichen Flaschenreinigungsanlagen für Abfülllinien keine Rücksicht auf den individuellen Verschmutzungsgrad der Behältnisse genommen. Alle Behältnisse erfahren praktisch den gleichen Reinigungszyklus, unabhängig davon, ob die Behältnisse stark oder leicht verschmutzt sind. Aus dem Stand der Technik bekannt sind lediglich Anlagen, bei denen der Verschmutzungsgrad nach den Reinigungsvorgang überprüft wird, um auf diese Weise regelnd auf den Reinigungsprozess einwirken zu können.

Weiterhin ist es im Stand der Technik bekannt, den Verschmutzungsgrad von Behältnissen über Messverfahren in einem Labor zu bestimmen, wobei sowohl eine Verschmutzung als auch eine mikrobiologische Fracht quantifiziert werden können.

Für diese Art der Messung ist die Entnahme der Behältnisse aus einer Linie notwendig. Eine Messung direkt in der Linie ist nicht möglich. Weiterhin sind derartige Messungen zeitaufwendig und die Behältnisse können nur stichprobenartig getestet werden. Im eigentlichen Abfüllprozess erfolgt keine Quantifizierung des Verschmutzungsgrades vor einer Behältnisreinigungsmaschine. Dadurch werden die Behältnisse unabhängig von ihrem Verschmutzungsgrad auf gleichen Einstellungen gereinigt. Eine bedarfsgerechte Reinigung ist somit nicht möglich.

Die DE 10 2010 031 564 A1 beschreibt eine intelligente Steuerung einer Flaschenwaschmaschine.

Die DE 10 2016 102 672 A1 offenbart eine Behälterbehandlungsmaschine. Dabei wird zunächst ein Verschmutzungsgrad ermittelt und anschließend die Maschine auch in Abhängigkeit von diesem Verschmutzungsgrad gesteuert.

Aus der DE 203 012 24 U1 ist eine Vorrichtung zur Untersuchung von Behältnissen bekannt. Diese weist ein Saugorgan auf, welches mit einer Analyseeinrichtung verbunden ist.

Die EP 2 409 790 A2 beschreibt eine Intelligente Steuerung einer Flaschenwaschmaschine. Dabei wird ein Kontrollparameter bestimmt, der einen Verschmutzungsgrad von gereinigten Flaschen widerspiegelt und es wird ein Verschmutzungsgrad der gereinigten Flaschen detektiert. Auf dieser Basis werden Reinigungsparameter eingestellt.

Die DE 11 2020 002 708 T5 beschreibt ein Kontroll- und/oder Identifizierungsverfahren in einer automatischen Maschine für die Herstellung oder die Verpackung von Konsumgütern insbesondere der Tabakindustrie. Dabei wird eine Hyperspektraldetektionseinheit zum Detektieren von Veränderungen eines elektrischen Feldes eingesetzt.

Aus der WO 2023/027991 A1 ist ein Verfahren bekannt, bei dem ein hyperspektrales Bild aufgenommen wird, um auf vorbestimmte Eigenschaften von Kunststoffobjekten zu schließen.

Aus der DE10 2022 117 311A1 ist ein Verfahren zum Erfassen einer Belegungssituation von Behältern bekannt.

Ausgehend von dem zitierten Stand der Technik stellt sich die der Erfindung zugrunde liegende Aufgabe, eine effektivere und auch energiesparendere Reinigung von Behältnissen vorzusehen. Daneben soll auch eine verbesserte Inspektion von Behältnissen ermöglicht werden.

Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Reinigen von Behältnissen werden (insbesondere leere oder nur teilweise befüllte) Behältnisse mittels einer Transporteinrichtung transportiert und einer Reinigungseinrichtung zum Reinigen der Behältnisse zugeführt. Dabei reinigt diese Reinigungseinrichtung die Behältnisse insbesondere durch Beaufschlagung der Behältnisse mit einem fließfähigen Reinigungsmittel.

Erfindungsgemäß werden die zu reinigenden Behältnisse inspiziert und es wird wenigstens ein erster Wert ermittelt, der für einen Verschmutzungsgrad eines inspizierten Behältnisses oder einen Verschmutzungsgrad einer Gruppe von inspizierten Behältnissen charakteristisch ist und die Reinigungseinrichtung reinigt die zu reinigenden Behältnisse oder die zu reinigenden Gruppen von Behältnissen unter Berücksichtigung dieses Wertes, wobei unterschiedlich verschmutzte Behältnisse unterschiedlich gereinigt werden.

Im Rahmen der Erfindung wird daher vorgeschlagen, dass individuell für einzelne Behältnisse oder auch Gruppen von Behältnissen und insbesondere kleine Gruppen von Behältnissen Verschmutzungsgrade ermittelt werden und anschließend die Reinigungseinrichtung eine individuelle Reinigung dieser Behältnisse vornimmt.

Auf diese Weise können beispielsweise weniger verschmutzte Behältnisse mit geringerem Aufwand gereinigt werden als stärker verschmutzte Behältnisse. Auch wäre es möglich, beispielsweise einen Bereich der Reinigung in Abhängigkeit von dem Verschmutzungsgrad zu regeln. Sollte beispielsweise bei Behältnissen eine besonders starke Verschmutzung der Außenwand oder der Böden festgestellt werden, können anschließend eben diese Bereiche stärker gereinigt werden.

Bei einem weiteren erfindungsgemäßen Verfahren zum Reinigen von Behältnissen werden Behältnisse mittels einer Transporteinrichtung transportiert und einer Reinigungseinrichtung zum Reinigen der Behältnisse zugeführt, wobei diese Reinigungseinrichtung die Behältnisse insbesondere durch Beaufschlagung der Behältnisse mit einem fließfähigen (und insbesondere flüssigen oder dampfförmigen) Reinigungsmittel reinigt.

Erfindungsgemäß werden die zu reinigende Behältnisse inspiziert und wenigstens ein erster Wert ermittelt, der für einen Verschmutzungsgrad eines inspizierten Behältnisses oder einen Verschmutzungsgrad einer Gruppe von inspizierten Behältnisse charakteristisch ist, wobei zur Inspektion der Behältnisse eine Spektralanalyse durchgeführt wird.

Bei diesem Verfahren wird eine besondere Art der Inspektion vorgeschlagen, welche hier insbesondere auch eine Inlineinspektion einzelner Behältnisse ermöglicht. Dabei ist es möglich, dass auf die Behältnisse Strahlung angestrahlt wird und von den Behältnissen transmittierte und/oder reflektierte Strahlung spektroskopisch, d. h. insbesondere hinsichtlich ihrer Wellenlängen analysiert wird. Mittels dieser Art der Analyse kann beispielsweise auf die Art und/oder den Grad einer Verschmutzung geschlossen werden. Auf diese Weise ist es beispielsweise möglich, einen Reinigungsvorgang durchzuführen, der auf die Art, den Ort und/oder den Grad einer Verschmutzung angepasst ist.

Besonders bevorzugt nimmt die Reinigungseinrichtung eine Innenreinigung der Behältnisse vor. Besonders bevorzugt werden die Behältnisse auch außen gereinigt. Bevorzugt werden im Rahmen dieser Außenreinigung Etiketten gelöst, welche sich ggfs. an der Außenwandung der Behältnisse befinden. Bevorzugt wird die Außenreinigung der Behältnisse derart vorgenommen, dass diese mikrobiologisch rein sind.

Es ist weiterhin auch möglich, eine individuelle Anpassung der Reinigung vorzunehmen. So wäre es möglich, Behältnisse und/oder Gruppen bzw. Chargen von Behältnissen individuell unterschiedlich zu reinigen.

Im Gegensatz zum Stand der Technik ist es damit möglich, ein einzelnes Behältnis oder eine Gruppe von Behältnissen individuell und auch bedarfsgerecht zu reinigen.

Bei einem weiteren bevorzugten Verfahren wird auch eine Inspektion der Behältnisse nach deren Reinigung vorgenommen. In Reaktion auf diese weitere Inspektion können beispielsweise einzelne Behältnisse ausgeschleust werden oder aber der Reinigungsprozess angepasst werden. Auch beide Maßnahmen wären denkbar.

Bei einem weiteren bevorzugten Verfahren wird sowohl vor als auch hinter der Reinigungseinrichtung eine Inspektion und insbesondere eine spektrale Analyse vorgenommen, insbesondere um die je nach Verschmutzungsart auftretenden Muster zu charakterisieren und/oder um die notwendigen Reinigungsparameter mit den Verschmutzungsarten und - gruppen zu korrelieren. In einem möglichen Serienprodukt müsste ggf. nur noch vor der Reinigungseinrichtung inspiziert werden da die Spektral-Muster und zugehörigen Reinigungsparameter bekannt sind.

Bevorzugt handelt es sich bei den Behältnissen um Kunststoffbehältnisse oder Glasbehältnisse. Besonders bevorzugt handelt es sich um wiederbefüllbare Behältnisse bzw. Mehrwegbehältnisse oder um recycelte Behältnisse. Bei einem weiteren bevorzugten Verfahren handelt es sich bei den Behältnissen um Getränkebehältnisse.

Bei einem weiteren bevorzugten Verfahren handelt es sich bei der Transporteinrichtung um ein Transportband oder um eine Transporteinrichtung, welche die Behältnisse an ihren Böden, oder an ihren Seitenwandungen führt.

Besonders bevorzugt werden die Behältnisse (insbesondere in dem Bereich der Inspektionseinrichtung) vereinzelt und insbesondere zueinander beabstandet transportiert. Besonders bevorzugt ist aber ein Abstand zwischen den einzelnen Behältnissen größer als ein halber Behältnisdurchmesser, bevorzugt größer als ein Behältnisdurchmesser und bevorzugt größer als zwei Behältnisdurchmesser. Bevorzugt ist ein Abstand zwischen den Behältnissen kleiner als der fünffache Behältnisdurchmesser, bevorzugt kleiner als der vierfache Behältnisdurchmesser. Es wäre jedoch auch denkbar, die Behältnisse nicht zueinander beabstandet zu transportieren.

Mit dem hier beschriebenen Verfahren ist auch eine Inspektion von teilweise befüllten Behältnissen möglich, beispielsweise Behältnisse, die noch mit Restflüssigkeiten befüllt sind. Auch ist eine Inspektion von vollen Behältnissen möglich.

Bei einem weiteren bevorzugten Verfahren wird jedes Behältnis inspiziert und für jedes Behältnis der wenigstens eine für den Verschmutzungsgrad charakteristische Wert bestimmt. Auf diese Weise kann eine individuelle Reinigung jedes einzelnen Behältnisses oder jeder einzelnen Charge bzw. Gruppe von Behältnissen ermöglicht werden. Besonders bevorzugt wird jedem inspizierten Behältnisse der wenigstens einen charakteristischen Wert zugeordnet. So ist es möglich, jedem Behältnis eine Identnummer zuzuordnen, über welche auch der Verschmutzungsgrad individuell auswertbar ist.

Bei einem weiteren bevorzugten Verfahren erfolgt ein Erkennen und Verfolgen einzelner Objekte und insbesondere einzelner Behältnisse. Auf diese Weise kann jedem Behältnis, oder auch jeder Charge bzw. Gruppe von Behältnissen das/die sich im Bildbereich beispielsweise einer Kamera befindet, eine Identnummer zugewiesen werden. Bevorzugt wird zu diesem Zweck jedes einzelne Behältnis (eindeutig) identifiziert. Dies kann beispielsweise anhand von für jedes Behältnis erfassten eindeutigen Merkmalen erfolgen. Dieser Ausgestaltung liegt die Idee zugrunde, dass sich auch an sich gleiche Behältnisse an bestimmten für sie individuellen Merkmalen unterscheiden lassen und diese Merkmale verwendet werden, um die Behältnisse eindeutig zu identifizieren.

Diese Identnummer kann dabei auch, wie unten genauer beschrieben, über mehrere Bildbereiche von verschiedenen Bildaufnahmeeinrichtungen wie Kameras beibehalten werden, solange die Bildinformationen der Kameras in dem Bilderkennungsalgorithmus bevorzugt zusammenlaufen und dort ausgewertet werden.

Wird die Behältniserkennung mit einer Bodeninspektion und/oder einer Seitenwandinspektion insbesondere im Zulauf zu einer Behältnisreinigungsanlage für Behältnisse kombiniert, kann vorteilhaft für jedes Behältnis die individuelle Verschmutzung bestimmt werden und über eine zugewiesene Behältnis - Identnummer der jeweilige Verschmutzungsgrad dem Behältnis zugewiesen werden.

Mit diesen Informationen (Behältnis, Identnummer und Verschmutzungsgrad) ist bevorzugt eine gezielte und individualisierte Reinigung der Behältnisse möglich. Die Zuführung der Behältnisse zu der Behältnisreinigungsanlage kann dabei ungeordnet erfolgen, beispielsweise über schräg angeordnete oder angetriebene Bänder oder aber auch geordnet, beispielsweise über ein First in First out System (FiFo System) oder ein Robotics System ausgeführt sein.

Maschinenseitig ist es vorteilhaft, wenn die Informationen über die Verschmutzung des jeweiligen Behältnisses an eine Maschinensteuerung angebunden werden oder sind. Auf diese Weise können beispielsweise reinigungsspezifische Größen wie zum Beispiel Temperatur, Druck, Zusammensetzung des Reinigungsmediums behältnisindividuell angepasst werden.

Dafür ist es vorteilhaft, dass jedes Behältnis im Laufe seines Reinigungszyklus von einer oder mehreren Spritzvorrichtungen von innen und/oder außen mit einem seinem Verschmutzungsgrad entsprechenden Reinigungsrezept (insbesondere Druck und/oder Konzentration und/oder Temperatur der Reinigungsflüssigkeit etc.) beaufschlagt wird.

Im Laufe des Reinigungsprozesses kann es vorteilhaft (insbesondere aus energetischen oder konstruktiven Gesichtspunkten heraus) auch Reinigungsstrecken geben, in denen alle Behältnisse gleich behandelt werden, beispielsweise im Wege einer Vorreinigung oder im Wege eines Spülens nach dem Reinigungsvorgang.

Bei einem weiteren bevorzugten Verfahren werden wenigstens zeitweise die Behältnisse auch während ihrer Reinigung bzw. während des Reinigungsvorgangs inspiziert.

Besonders bevorzugt werden die Behältnisse berührungsfrei und insbesondere optisch inspiziert. Dabei kann weiterhin einem durch die erste Inspektionseinrichtung zugeordneten Inspektionsergebnis auch ein Inspektionsergebnis während des Reinigungsvorgang zugeordnet werden, da wie oben erwähnt, bevorzugt Behältnisse individuell individualisierbar sind.

So kann beispielsweise festgestellt werden, dass ein bestimmtes Behältnis mit einem bestimmten Verschmutzungsgrad X einem bestimmten Reinigungsvorgang Y unterworfen wurde und dabei das Reinigungsergebnis E erzielt wurde.

So ist es möglich, dass die Behältnisse während ihres Durchlaufs durch die Reinigungseinrichtung an Kamerasystemen vorbeilaufen, die den Reinigungszustand der Behältnisse überwachen. Bevorzugt können auf diese Weise individuelle Reinigungskonzepte angepasst werden und insbesondere kontinuierlich angepasst werden.

Diese Kamerasysteme oder Bildaufnahmeeinrichtungen können sowohl innerhalb einer Reinigungsmaschine als auch außerhalb einer Reinigungsmaschine angeordnet sein. Bei letzterem Fall ist es denkbar, dass die Bildaufnahmeeinrichtung oder Kamera durch eine Öffnung in einer Maschinenaußenwand, die beispielsweise durch eine durchsichtige Platte oder Scheibe abgedichtet ist, den Reinigungsfortschritt an einer oder mehreren bestimmten Positionen oder auch kontinuierlich überwacht.

Sollte ein bestimmtes Behältnis am Ende der Reinigungstrecke die dort vorteilhaft platzierte Qualitätsprüfung, insbesondere in Form einer Behältnisinspektion nicht bestehen, ist es möglich, dieses Behältnis erneut zu reinigen. So kann beispielsweise das Behältnis über ein Rückführsystem wieder dem ungereinigten Behältnisstrom zugeführt und erneut durch die Reinigungsmaschine geführt werden.

Bevorzugt wird ein Behältnis, welches am Ende der Reinigungsstrecke mehrmals beanstandet wurde aus dem Produktionsstrom aussortiert, weil beispielsweise ein nicht zu reinigender Defekt an dem Behältnis bzw. der Flasche vorliegt.

Die Vorteile einer behälterindividuellen Reinigung liegen auch in einer Energieeinsparung und/oder einer Einsparung von Reinigungsmitteln und Reinigungszeit.

Einem weiteren bevorzugten Verfahren wird zum Zweck der Inspektion mittels einer Bildaufnahmeeinrichtung wenigstens ein Bild und bevorzugt mehrere Bilder des oder der Behältnisse aufgenommen. Weiterhin erfolgt bevorzugt eine Auswertung des Bildes oder der Bilder. Bevorzugt wird durch eine Auswertung des Bildes oder der Bilder der für den Verschmutzungsgrad charakteristische Wert ermittelt.

Dabei ist es möglich, die aufgenommenen Bilder mit Referenzbildern zu vergleichen, um den Verschmutzungsgrad zu bestimmen. Auch kann bei der Auswertung der Bilder zur Ermittlung des Verschmutzungsgrads eine künstliche Intelligenz eingesetzt werden. Dabei können beispielsweise Bilder unterschiedlicher Verschmutzungsarten dieser künstlichen Intelligenz als Trainingsdaten zur Verfügung gestellt werden.

Eine KI bzw. maschinelles Lernen kann beim Inspizieren von Kunststoffbehältnissen und insbesondere von PET oder Glasbehältnissen für einen oder mehrere Prozessschritte eingesetzt werden. Dazu ist vorgesehen, von Bildern unterschiedlicher Verschmutzungen abgelegt sind und insbesondere strukturiert abgelegt sind. Diese Daten werden der KI zumindest teilweise als Trainingsdaten zur Verfügung gestellt.

Bei einem bevorzugten Verfahren werden zunächst Daten von bereits bestehenden Aufnahmen bzw. Bildern von verschmutzten Behältnissen gesammelt, die beispielsweise auf einer Abfülllinie verarbeitet werden bzw. wurden. Bevorzugt sind diese Daten aus einer Gruppe von Daten ausgewählt, welche einen Ort einer Verschmutzung, eine Farbe einer Verschmutzung, eine Größe einer Verschmutzung, eine Spektralanalyse eines verschmutzten Bereichs eines Behältnisses, eine Hyperspektralanalyse eines verschmutzten Bereichs eines Behältnisses oder ähnliche Eigenschaften beinhaltet.

Bevorzugt ist durch einen Nutzer auswählbar, welche Daten der KI und/oder einer Modellerzeugungseinrichtung zur Verfügung gestellt werden. Dabei kann die KI jedoch auch Vorschläge unterbreiten, welche Daten zur Verfügung gestellt werden sollten.

Dabei werden bevorzugt die Daten, welche die Behältnisse bzw. deren Verschmutzungen betreffen mittels Bildaufnahmeeinrichtungen und/oder (Hyper)spektralanalyseeinrichtungen bestimmt.

Bevorzugt wird mit den gesammelten Daten ein maschinelles Lernmodell entwickelt, welches die Beziehung zwischen den Eigenschaften des Behältnisses, den festgestellten Verschmutzungen, und/oder den Effekt eines vorbestimmten Reinigungsprozesses vorhersagen kann.

Dies kann beispielsweise durch die Verwendung von Regressionsalgorithmen oder neuronalen Netzen erfolgen. Das entwickelte maschinelle Lernmodell wird bevorzugt dann verwendet, um beim Reinigen von Behältnissen in den verschiedenen Prozessschritten eingesetzt werden zu können.

Auch kann eine künstliche Intelligenz (KI) mittels neuronaler Netze und dergleichen durchgeführt bzw. verwendet werden. Besonders bevorzugt wird wenigstens ein von einer Bildaufnahmeeinrichtung aufgenommenes Bild oder ein oder mehrere von einer Spektralanalyseeinrichtung aufgenommener Werte ausgewertet. Dabei ist es möglich, dass ein (Bild)auswertungs - Modell maschinellen Lernens und/oder ein maschinelles Lernmodell erstellt wird.

Bevorzugt basiert das Bildauswertungs-Modell maschinellen Lernens und/oder das Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Bildauswertungs-Modell und/oder dem Modell maschinellen Lernens bzw. dem (künstlichen) neuronalen Netzwerk die (zu verarbeitenden) Daten, insbesondere die ortsaufgelösten Bilder oder Spektralanalysen (oder hiervon abgeleitete Daten) oder auch andere Messdaten als Eingangsgrößen zugeführt.

Bevorzugt bildet das Bildauswertungs-Modell und/oder das Modell zur Auswertung von Spektralanalysen und/oder das Modell maschinellen Lernens bzw. das künstliche neuronale Netzwerk die Eingangsgrößen in Abhängigkeit einer parametrierbaren Verarbeitungskette auf Ausgangsgrößen ab.

Besonders bevorzugt wird oder werden oder sind als Ausgangsgröße eine oder mehrere für einen Reinigungsvorgang charakteristische Größen wie insbesondere eine Sollmaterialdicke, eine Höhe, ein Durchmesser, eine Konzentration eines Reinigungsmittels, ein Druck eines Reinigungsmittels, eine Temperatur eines Reinigungsmittels, eine Gattung eines Reinigungsmittels oder dergleichen als charakteristische Größe gewählt.

Daneben kann als Ausgangsgröße auch ein Bild eines Behältnisses oder eines Teil hiervon ausgegeben werden.

Bevorzugt wird/wurde das Bildauswertungs-Modells maschinellen Lernens und/oder das maschinelle Lernmodell unter Verwendung vorgegebener Trainingsdaten trainiert, wobei bevorzugt durch das Training die parametrierbare Verarbeitungskette parametriert wird.

Bei einem bevorzugten Verfahren werden in dem Trainingsprozess des Bildauswertungs-Modells und/oder des Modells maschinellen Lernens Trainingsdaten verwendet, welche eine von der wenigstens einen Bildaufnahmeeinrichtung und/oder der wenigstens einen Spektralanalyseeinrichtung erfasste Vielzahl von ortsaufgelösten Bildern und/oder Messwerte von möglichen Behältnissen oder Abschnitten von Behältnissen umfassen.

Bei einem bevorzugten Verfahren werden in dem Trainingsprozess des Bildauswertungsmodells oder des Spektralanalyseauswertungsmodells und/oder des Modells maschinellen Lernens Trainingsdaten verwendet, welche Vorgaben umfassen, welche eine Farbe einer Verschmutzung, einen Bereich einer Verschmutzung, eine Zusammensetzung der Verschmutzung und dergleichen enthält.

Bevorzugt werden die zur Verwendung als Trainingsdaten vorgesehenen (von der wenigstens einen Bildaufnahmeeinrichtung und/oder der wenigstens einen Spektralanalyseeinrichtung aufgenommenen oder von einer anderen Messeinrichtung erfassten) ortsaufgelösten Bilder oder anderen Daten mit wenigstens einem Klassifikationsmerkmal und bevorzugt mit mehreren Klassifikationsmerkmalen versehen.

Weiterhin kann auch ein ermittelter Verschmutzungsgrad einem bestimmten Bereich des Behältnisses zugeordnet werden.

So ist es möglich, dass ein Bild einer Außenwand des Behältnisses aufgenommen wird und aus diesem Bild auf eine Verschmutzung des Behältnisses geschlossen wird bzw. ein Verschmutzungsgrad ausgegeben wird. So kann es sich beispielsweise bei dem Verschmutzungsgrad um ein Verschmutzungsniveau von 1-10 handeln, wobei der Wert 1 eine geringe Verschmutzung indiziert und der Wert 10 eine hohe Verschmutzung.

Bei einem weiteren bevorzugten Verfahren wird, wenigstens ein zweiter Wert ermittelt, der für einen Verschmutzungsgrad eines inspizierten Behältnisses oder einen Verschmutzungsgrad einer Gruppe von inspizierten Behältnissen charakteristisch ist. So können beispielsweise unterschiedliche Bereiche der Behältnisse inspiziert werden und entsprechende Werte bestimmt werden, etwa eine Verschmutzung eines Bodenbereichs, eines Grundbereichs oder eines Mündungsbereichs. So ist es möglich, dass einzelne Behältnisse stärker am Boden verschmutzt sind und weniger an ihrem Grundkörper und andere wiederum an einem Mündungsbereich stark verschmutzt sind. Daneben kann unterschieden werden, ob es sich um Verschmutzungen im Inneren des Behältnisses oder um Verschmutzungen an der Außenwand des Behältnisses handelt.

Daneben werden bevorzugt die Verschmutzungen kategorisiert. So können beispielsweise Verschmutzungen durch Sand oder dergleichen unterschieden werden von schwerlöslichen Verschmutzungen.

Daneben wäre es auch möglich, solche Verschmutzungen oder allgemein Beeinträchtigungen festzustellen, welche nicht mittels Reinigungsverfahren beseitigt werden können. Falls derartige Verschmutzungen festgestellt werden, kann das betreffende Behältnis ausgeschleust werden.

Bevorzugt wird auch wenigstens ein dritter Wert ermittelt, der für einen Verschmutzungsgrad eines inspizierten Behältnisses oder einen Verschmutzungsgrad einer Gruppe von inspizierten Behältnissen charakteristisch ist. So können beispielsweise drei Abschnitte des Behältnisses (z.B. Bodenbereich, Grundkörper, Mündungsbereich) hinsichtlich der Innenwandung oder der Außenwandung inspiziert werden.

Bei einem weiteren bevorzugten Verfahren wird unter Berücksichtigung mehrerer für den Verschmutzungsgrad der Behältnisse charakteristischer Werte ein für einen Gesamtverschmutzungsgrad des oder der Behältnisse charakteristischer Wert bestimmt und bevorzugt wird die Reinigung der Behältnisse in Abhängigkeit von diesem für den Gesamtverschmutzungsgrad charakteristischen Wert durchgeführt.

So kann beispielsweise der Bodenbereich eines Behältnisses stärker verschmutzt sein und den Verschmutzungsgrad 6 erhalten. Der Mündungsbereich des Behältnisses kann beispielsweise nicht oder kaum verschmutzt sein und den Wert 1 erhalten. Aus diesen beiden Werten wird ein Gesamtwert (beispielsweise der Wert 3 ermittelt, auf Basis dessen die Reinigung der Behältnisse durchgeführt wird.

Daneben ist auch möglich, die Verschmutzung der Behältnisse in Umfangsrichtung zu erfassen. So kann beispielsweise ein Bodenbereich in einer bestimmten Umfangsrichtung stärker verschmutzt sein als in einem anderen Bereich der Umfangsrichtung. Auch dies kann wiederum bei der Bewertung des Gesamtverschmutzungsgrads berücksichtigt werden.

Bei einem weiteren bevorzugten Verfahren wird die unterschiedliche Reinigung unterschiedlicher Behältnisse dadurch bewirkt, dass wenigstens ein für den Reinigungsvorgang charakteristischer Reinigungsparameter für unterschiedliche Behältnisse geändert wird.

Besonders bevorzugt ist dieser Reinigungsparameter aus einer Gruppe von Reinigungsparametern ausgewählt, welche eine Temperatur eines Reinigungsmittels, einen Druck eines Reinigungsmittels, eine Konzentration eines Reinigungsmittels, eine Zusammensetzung eines Reinigungsmittels, eine Zeitdauer einer Reinigung mit dem Reinigungsmittel, eine Konzentration des Reinigungsmittels in einer Reinigungsflüssigkeit, eine Gattung des Reinigungsmittels und dergleichen enthält.

So kann beispielsweise individuell ein Druck eines Reinigungsmittels angepasst werden. Auch kann die Zeitdauer der Beaufschlagung mit dem Reinigungsmittel angepasst werden.

Besonders bevorzugt erfolgt die Reinigung mit einer Vielzahl von Reinigungsdüsen, welche dazu geeignet und bestimmt sind, unterschiedliche Bereiche des Behältnisses zu beaufschlagen.

Bei einem weiteren bevorzugten Verfahren weist die Reinigungseinrichtung eine Vielzahl von Reinigungsbereichen auf, durch welche die Behältnisse transportiert werden oder transportiert werden können. Bevorzugt wird einer dieser Reinigungsbereiche für jedes Behältnis in Abhängigkeit von dem Verschmutzungsgrad ausgewählt. So kann beispielsweise in einem Reinigungsbereich eine intensivere Reinigung stattfinden als einem anderen Reinigungsbereich. Auch können die Zeiträume der Reinigungen sich in den einzelnen Reinigungsbereichen unterscheiden.

Bevorzugt werden die Behältnisse auch - insbesondere individuell - durch einige einzelne Reinigungsbereiche transportiert oder gefördert

Bevorzugt sind wenigstens zwei, bevorzugt wenigstens drei und bevorzugt wenigstens vier derartige Reinigungsbereiche vorgesehen.

Bei einem bevorzugten Verfahren reinigt die Reinigungseinrichtung die zu reinigenden Behältnisse oder die zu reinigenden Gruppen von Behältnissen unter Berücksichtigung des oben genannten Wertes, der für die Verschmutzung charakteristisch ist, wobei unterschiedlich verschmutzte Behältnisse unterschiedlich gereinigt werden.

Bei einem weiteren bevorzugten Verfahren werden die Behältnisse mittels einer Strahlungseinrichtung beleuchtet und/oder bestrahlt und die von Behältnissen reflektierte und/oder transmittierte Strahlung wird erfasst und es wird wenigstens eine Wellenlänge der von den Behältnissen reflektierten und/oder transmittierten Strahlung ermittelt. Bevorzugt wird die von den Behältnissen reflektierte oder die durch die Behältnisse transmittierte Strahlung spektral analysiert.

Auf diese Weise wird insbesondere eine spektroskopische Untersuchung der Behältnisse vorgenommen. Insbesondere wird eine spektrale Analyse der von den Behältnissen reflektierten oder durch die Behältnisse getretenen Strahlung vorgenommen. Zu diesem Zweck wird bevorzugt wenigstens eine und wird bevorzugt eine Vielzahl von Spektralkameras verwendet.

Bei einem zweiten Verfahren wird eine Hyperspektralanalyse (insbesondere der von den Behältnissen reflektierten und/oder der durch die Behältnisse tretenden Strahlung) durchgeführt.

Unter einer hyperspektralen Spektrometrie versteht man ein Sensorsystem, welches elektromagnetische Signale von sehr vielen eng beieinanderliegenden Wellenlängen aufzeichnen kann. Abhängig von einem eingesetzten Sensor werden Wellenlängen mit spektralen Auflösungen von 3 nm bis 10 nm aufgezeichnet. Dabei wird bevorzugt eine Vielzahl von Wellenlängen betrachtet, welche vom Ultraviolett- bis Infrarotbereich reichen können. Eine orts- und/oder wellenlängenaufgelöste Detektion in verschiedenen elektromagnetischen Bereichen wird vorteilhaft genutzt. Je nach Anzahl der detektierten Punkte im Spektrum kann eine hyperspektrale oder multispektrale Bildgebung erfolgen. Das menschliche Auge sieht die Umwelt lediglich in den Wellenlängen der Grundfarben rot, grün und blau, was etwa Wellenlängen von 350-750 nm entspricht. Somit können durch die hyperspektrale Bildgebung Merkmale sichtbar gemacht werden, welche für das menschliche Auge nicht sichtbar sind. Hyperspektrale Sensoren können als aktive oder passive Sensoren genutzt werden.

Die Funktionsweise des hyperspektralen Sensors kann mit folgenden Schritten, in Bezug auf die Erkennung des Verschmutzungsgrades, erklärt werden:
- Lichtaufnahme: Die Kamera nimmt das von einem Objekt reflektierte oder emittierte Licht auf, in diesem Fall das Licht von einem oder mehreren verschmutzen Behältern.
- Spektrale Zerlegung: Das aufgenommene Licht wird in viele schmale Wellenlängenbereiche zerlegt, möglich sind Hunderte oder Tausende.
- Detektion: Für jeden Wellenlängenbereich wird die Lichtintensität gemessen.
- Datenkubus: Die Messwerte werden bevorzugt in einem dreidimensionalen Datensatz (Hyperspektralbild) gespeichert - so können zwei räumliche Dimensionen plus die spektrale Dimension gespeichert werden.
- Analyse: Bevorzugt analysiert eine spezielle Software analysiert die spektralen Signaturen, um Materialien zu identifizieren oder Eigenschaften zu bestimmen.

Hyperspektrale Kameras können mehrere 100 Wellenlängen aufnehmen, sodass ein großer Bereich des Farbspektrums vom ultravioletten bis zum Infrarotbereich abgedeckt wird. Vor allem im Infrarotbereich lassen sich spezifische Signaturen von unterschiedlichen Materialien eindeutig identifizieren (vergleichbar mit einem Fingerabdruck). So können Materialien oder auch Oberflächen anhand ihrer Zusammensetzung oder anhand von Verschmutzungen eindeutig erkannt und klassifiziert werden.

Damit erlaubt die Hyperspektralanalyse auch eine Analyse dieser einzelnen Verschmutzungen hinsichtlich deren Gattung. Bei einem weiteren bevorzugten Verfahren wird die hyperspektrale Analyse in einem Wellenlängenbereich durchgeführt, der zwischen 750 nm und 2500 nm liegt

Sowohl in der Lebensmittel-, Schüttgut- oder Verpackungskontrolle ist der Einsatz von Hyperspektralkameras vorteilhaft.

Verschmutzungen und mikrobiologische Kontaminationen verändern die spektralen Reflexionseigenschaften der Behältnisse. Diese Veränderungen können mit Hyperspektral-Kameras erfasst werden. Ähnliche Systeme werden auch in der Inspektion von Lebensmitteln eingesetzt.

Mit einer Analyse der Reflektionseigenschaften (oder ggfs. auch der Transmissionseigenschaften) ist es also möglich den Verschmutzungsgrad der Behältnisse kontaktlos in bevorzugt in Echtzeit darzustellen.

Ein entsprechendes System wird dazu bevorzugt vor und ggf. zusätzlich auch hinter der Reinigungseinrichtung installiert und quantifiziert bevorzugt den Verschmutzungsgrad vor und hinter der Reinigungseinrichtung.

Durch eine Quantifizierung und Kategorisierung der Flaschen nach ihrem Verschmutzungsgrad und der Art der Verschmutzung kann der Reinigungsprozess jeweils angepasst werden. Es wird vermieden, dass zu viel oder zu wenig gereinigt wird. Dadurch ergeben sich erhebliche Einsparpotentiale bei Energie und Medien. Auch können Fehler oder notwendige Wartungen anhand der (hyper)spektralen Analyse aufgezeigt werden.

Gegebenenfalls ist eine Detektion von Materialien oder Verschmutzungen gar nicht notwendig und es kann direkt über Korrelationswissen von Beschaffenheit des Datenkubus auf die notwendigen Reinigungsparameter geschlossen werden. Es werden also direkt die Reinigungsparameter aus den Datenkuben gelesen.

Bei einem weiteren bevorzugten Verfahren werden die Behältnisse mittels einer Strahlung beaufschlagt und die durch die Behältnisse tretende Strahlung oder bevorzugt die von den Behältnissen reflektierte (oder gestreute) Strahlung wird wenigstens teilweise mittels einer Strahlungserfassungseinrichtung bzw. einer Strahlungsdetektoreinrichtung erfasst. Bevorzugt wird eine Hyperspektralanalyse der durch die Behältnisse tretenden Strahlung oder der von den Behältnissen reflektierten und/oder gestreuten Strahlung vorgenommen. Bevorzugt handelt es sich bei der Strahlung um elektromagnetische Strahlung und insbesondere um Strahlung im infraroten, und/oder sichtbaren und/oder ultravioletten Wellenlängenbereich

Bevorzugt wird über die Hyperspektralanalyse wenigstens ein Wert ermittelt, der für einen Verschmutzungsgrad dieser Behälter charakteristisch ist. So kann beispielsweise eine Art der Verschmutzung charakterisiert werden oder auch ein Grad der Verschmutzung, eine Farbe der Verschmutzung, eine Ausbreitungsfläche der Verschmutzung, ein Maß für eine zu erwartende Hartnäckigkeit der Verschmutzung, eine physikalische oder chemische Natur der Verschmutzung und dergleichen.

Die vorliegende Erfindung ist weiterhin auf die Verwendung einer Hyperspektralanalyseeinrichtung und/oder ein Hyperspektralverfahren zur Inspektion von Behältnissen und insbesondere zum Ermitteln eines Verschmutzungsgrads und/oder von Beschädigungen von Behältnissen gerichtet.

Die Anmelderin konnte ermitteln, dass sich Hyperspektralanalysen in besonderer Weise zum Inspizieren von Behältnissen und insbesondere von Kunststoffbehältnissen und Glasbehältnissen eignen. Auch kann mittels einer Hyperspektralanalyse auch eine Natur einer Verschmutzung präzise ermittelt werden.

Bevorzugt erfolgt die Inspektion oder auch insbesondere die (Hyper)spektralanalyse während einer Bewegung der Behältnisse. Auf diese Weise auch eine Analyse der Behältnisse in einem laufenden Betrieb, beispielsweise einem Produktionsbetrieb möglich.

Die vorliegende Erfindung ist weiterhin auf eine Vorrichtung zum Reinigen von Behältnissen gerichtet, mit einer Transporteinrichtung, die dazu geeignet und bestimmt ist, die Behältnisse zu einer Reinigungseinrichtung zum Reinigen der Behältnisse zu transportieren, wobei diese Reinigungseinrichtung dazu geeignet und bestimmt ist, die Behältnisse insbesondere durch Beaufschlagung der Behältnisse mit einem fließfähigen Reinigungsmittel zu reinigen.

Erfindungsgemäß weist die Vorrichtung eine in der Transportrichtung der Behältnisse vor der Reinigungseinrichtung angeordnete Inspektionseinrichtung auf, welche dazu bestimmt ist, die zu reinigenden Behältnisse zu inspizieren wobei wenigstens ein erster Wert ermittelbar ist, der für einen Verschmutzungsgrad einer Gruppe von inspizierten Behältnissen oder den Verschmutzungsgrad eines inspizierten Behältnisses charakteristisch ist.

Weiterhin ist die Reinigungseinrichtung dazu geeignet und bestimmt, die zu reinigenden Behältnisse oder die zu reinigenden Gruppen von Behältnissen unter Berücksichtigung des Wertes zu reinigen, wobei unterschiedlich verschmutzte Behältnisse unterschiedlich reinigbar sind.

Unter einer unterschiedlichen Reinigung wird dabei verstanden, dass wenigstens ein Parameter des Reinigungsvorgangs für diese beiden Behältnisse oder Behältnisgruppen unterschiedlich gewählt wird oder wählbar ist.

Die vorliegende Erfindung ist weiterhin auf eine Vorrichtung zum Reinigen von Behältnissen gerichtet mit einer Transporteinrichtung, welche dazu geeignet und bestimmt ist, die Behältnisse zu einer Reinigungseinrichtung zum Reinigen der Behältnisse zu transportieren, wobei diese Reinigungseinrichtung dazu geeignet und bestimmt ist, die Behältnisse insbesondere durch Beaufschlagung der Behältnisse mit einem fließfähigen Reinigungsmittel zu reinigen.

Bevorzugt handelt es sich bei dem fließfähigen Reinigungsmittel um ein flüssiges und/oder gasförmiges und insbesondere um ein flüssiges Reinigungsmittel.

Erfindungsgemäß weist die Vorrichtung eine in der Transporteinrichtung der Behältnisse vor der Reinigungseinrichtung angeordnete Inspektionseinrichtung auf, welche dazu geeignet und bestimmt ist, die zu reinigenden Behältnisse zu inspizieren und es ist wenigstens ein erster Wert ermittelbar, der für einen Verschmutzungsgrad eines inspizierten Behältnisses oder einen Verschmutzungsgrad einer Gruppe von inspizierten Behältnissen charakteristisch ist. Dabei weist diese Inspektionseinrichtung eine Spektralanalyseeinrichtung auf.

Unter einer Spektralanalyseeinrichtung wird insbesondere eine Einrichtung verstanden, welche dazu geeignet und bestimmt ist Strahlung hinsichtlich ihrer Wellenlänge zu analysieren.

Besonders bevorzugt fördert die Transporteinrichtung die Behältnisse von der Inspektionseinrichtung zur Reinigungseinrichtung. Besonders bevorzugt ist die Transporteinrichtung auch dazu geeignet und bestimmt, die Behältnisse während ihrer Inspektion zu transportieren. Besonders bevorzugt weist die Transporteinrichtung wenigstens ein Transportband oder wenigstens eine Transportkette auf.

Bei einer weiteren bevorzugten Ausführungsform weist die Vorrichtung eine Behältniserkennungseinrichtung auf, welche dazu geeignet und bestimmt ist, individuelle Behältnisse zu erkennen. So kann diese Erkennungseinrichtung beispielsweise die Behältnisse an bestimmten individuellen Merkmalen erkennen und insbesondere eindeutig erkennen. Besonders bevorzugt können den erkannten Behältnissen diese identifizierenden Werte beispielsweise Identifikationsnummern (oben auch als Identnummern bezeichnet) zugeordnet werden.

Bei einer weiteren bevorzugten Ausführungsform weist die Vorrichtung ein Zuordnungseinrichtung auf, welche einigen und bevorzugt jedem inspizierten Behältnisse jeweils einen Messwert zuordnet, der für den Verschmutzungsgrad dieses Behältnisses charakteristisch ist. Es wäre jedoch auch eine stichprobenartige Überprüfung möglich.

Bei einer weiteren bevorzugten Ausführungsform weist die Vorrichtung eine weitere Inspektionseinrichtung auf. Dabei kann diese weitere Inspektionseinrichtung in einem Bereich der Reinigungseinrichtung und/oder auch (in der Transportrichtung der Behältnisse) nach der Reinigungseinrichtung angeordnet sein. Es ist aber auch möglich, Verschmutzungsgrade von bestimmten oder individuellen Behältnissen vor und nach oder während der Reinigung zu vergleichen.

Auf Basis dieses Vergleichs kann bevorzugt auf den Reinigungsprozess eingewirkt werden. Es wäre jedoch auch möglich, eine Ist - Verschmutzung nach der Reinigung festzustellen und diese mit einem Soll - Reinheitsgrad der Behältnisse zu vergleichen. Auch auf Basis dieses Vergleichs kann der Reinigungsprozess angepasst werden.

Dabei kann dieser Vergleich auch in Abhängigkeit von unterschiedlichen Bereichen der Behältnisse durchgeführt werden. So können beispielsweise die Reinheitsgrade oder die Reinigungsgrade von Böden miteinander verglichen werden. Falls etwa festgestellt wird, dass die Böden der Behältnisse unzureichend gereinigt wurden, kann auch auf fehlerhafte Bereiche der Reinigungseinrichtung geschlossen werden, beispielsweise auf defekte Reinigungsdüsen, welche die Bodenbereiche reinigen.

Bei einer weiteren vorgelassen Ausführungsform weist die Inspektionseinrichtung wenigstens eine und bevorzugt mehrere Bildaufnahmeeinrichtungen auf, welche dazu geeignet und bestimmt sind, ortsaufgelöste Bilder von den zu inspizieren Behältnissen aufzunehmen.

Bei einer weiteren bevorzugten Ausführungsform weist die Reinigungseinrichtung mehrere Reinigungsbereiche auf beziehungsweise bildet mehrere Reinigungsbereiche aus, denen die zur reinigenden Behältnisse wahlweise zuführbar sind.

Bevorzugt ist dabei diese wahlweise Zuführung in Abhängigkeit von einem Verschmutzungsgrad der Behältnisse durchführbar.

So kann die Reinigungseinrichtung eine Vielzahl von Reinigungsgassen ausbilden, zu oder in denen wahlweise die Behältnisse transportiert werden können. Besonders bevorzugt sind diese Reinigungsbereiche und insbesondere Reinigungsgassen von einer Transporteinrichtung erreichbar. Auf diese Weise ist es möglich, die Behältnisse individuell und insbesondere in Abhängigkeit von ihrer Verschmutzung oder ihrem Verschmutzungsgrad zu reinigen. Dabei wäre es auch möglich, dass in unterschiedlichen Bereichen der Reinigungseinrichtung unterschiedliche Bereiche des Behältnisses gereinigt werden und insbesondere und verschmutzungsabhängig gereinigt werden.

Bei einer weiteren vorteilhaften Ausführungsform weist die Vorrichtung eine Identifikationseinrichtung auf, welche dazu geeignet und bestimmt ist, einzelne Behältnisse zu identifizieren.

Bevorzugt weist diese Identifikationseinrichtung eine Bildaufnahmeainrichtung auf, welche dazu geeignet und bestimmt ist, ein ortsaufgelöstes Bild des Behältnisses oder der Behältnisse aufzunehmen. Daneben ist auch eine Auswerteeinrichtung vorgesehen, welche dazu geeignet und bestimmt ist, dieses ortsaufgelöste Bild auszuwerten und anhand dieser Auswertung insbesondere Behältnisse individuell zu identifizieren.

Weiterhin weist die Vorrichtung bevorzugt eine (zentrale) Steuerungseinrichtung für mehrere oder alle Anlagenteile auf. So ist es möglich, anhand der Bilder der Verschmutzungen einen Identcode auszugeben. Auf diese Weise ist das Behältnis eindeutig identifizierbar und es wird ihm weiterhin dieser Identcode zugeordnet.

Bevorzugt ist die Reinigungseinrichtung dazu geeignet und bestimmt, diese Verschmutzungsgrade zu verwenden, insbesondere um die Behältnisse individuell unterschiedlich zu reinigen.

Bei einer besonders bevorzugten Ausführungsform weist die spektrale Analyseeinrichtung eine Strahlungseinrichtung auf, welche dazu geeignet und bestimmt ist, die Behältnisse mit einer Strahlung und insbesondere einer definierten Strahlung zu beaufschlagen. Weiterhin weist die Spektralanalyseeinrichtung bevorzugt eine Strahlungsdetektoreinrichtung auf, welche dazu geeignet und bestimmt ist, von den Behältnissen reflektierte, gestreute und/oder transmittierte Strahlung zu erfassen.

Weiterhin ist diese Strahlungsdetektoreinrichtung bevorzugt dazu geeignet und bestimmt, diese Strahlung spektral zu analysieren. Insbesondere wird daher die auf die Strahlungsdetektoreinrichtung auftretende Strahlung hinsichtlich ihrer Wellenlänge ausgewertet.

Bevorzugt ist die Reinigungseinrichtung dazu geeignet und bestimmt, die zu reinigenden Behältnisse oder die zur reinigenden Gruppen von Behältnissen unter Berücksichtigung des für die Verschmutzung charakteristischen Wertes zu reinigen, wobei unterschiedlich verschmutzte Behältnisse unterschiedlich reinigbar sind.

Bei einer bevorzugten Ausführungsform ist die Transporteinrichtung dazu geeignet und bestimmt, Behältnisse von der Inspektionseinrichtung zu der Reinigungseinrichtung zu fördern. Bevorzugt ist weiterhin eine Behältniserkennungseinrichtung vorgesehen, welche dazu geeignet und bestimmt ist, individuelle Behältnisse zu erkennen, zum Beispiel an individuellen Unterscheidungsmerkmalen. Bevorzugt ist eine Zuordnungseinrichtung vorgesehen, die dem oder den Behältnissen derartige Werte oder Identifizierungen zuordnet.

Bevorzugt weist die Vorrichtung eine Zuordnungsrichtung auf, welche jedem inspizierten Behältnisse wenigstens einen Messwert zuordnet, der für den Verschmutzungsgrad dieses Behältnisses charakteristisch ist.

Bei einer weiteren Ausführungsform weist die Vorrichtung wenigstens eine weitere Inspektionseinrichtung auf, welche in dem Bereich der Reinigungseinrichtung oder nach der Reinigungseinrichtung angeordnet ist. Diese weitere Inspektionseinrichtung ist bevorzugt dazu geeignet und bestimmt, die gereinigten Behältnisse oder die Behältnisse während der Reinigung zu inspizieren.

Auf diese Weise können Verschmutzungsgrade vor und nach der Reinigung verglichen werden. Auf Basis dieses Vergleichs kann bevorzugt auf den Reinigungsprozess eingewirkt werden. So kann beispielsweise der Reinigungsprozess angepasst werden, wenn festgestellt wird, dass die Böden unzureichend gereinigt werden. Auch ist es möglich auf Fehler oder fehlerhafte Bereiche der Reinigungseinrichtung zu schließen, wie etwa nicht korrekt arbeitende Reinigungsdüsen.

Bei einer bevorzugten Ausführungsform weist die Spektralanalyseeinrichtung eine Hyperspektralanalyseeinrichtung auf. Insbesondere weist die Spektralanalyseeinrichtung (wenigstens) eine Hyperspektralkamera auf.

Weitere Vorteile und Ausführungsformen ergeben sich aus den beigefügten Zeichnungen.

Darin zeigen:
- Fig. 1: eine schematische Darstellung einer erfindungsgemäßen Vorrichtung zum Reinigen von Behältnissen;
- Fig. 2, 3: Gegenüberstellungen von Ergebnissen mit oder ohne Verwendung von Hyperspektralanalyse.

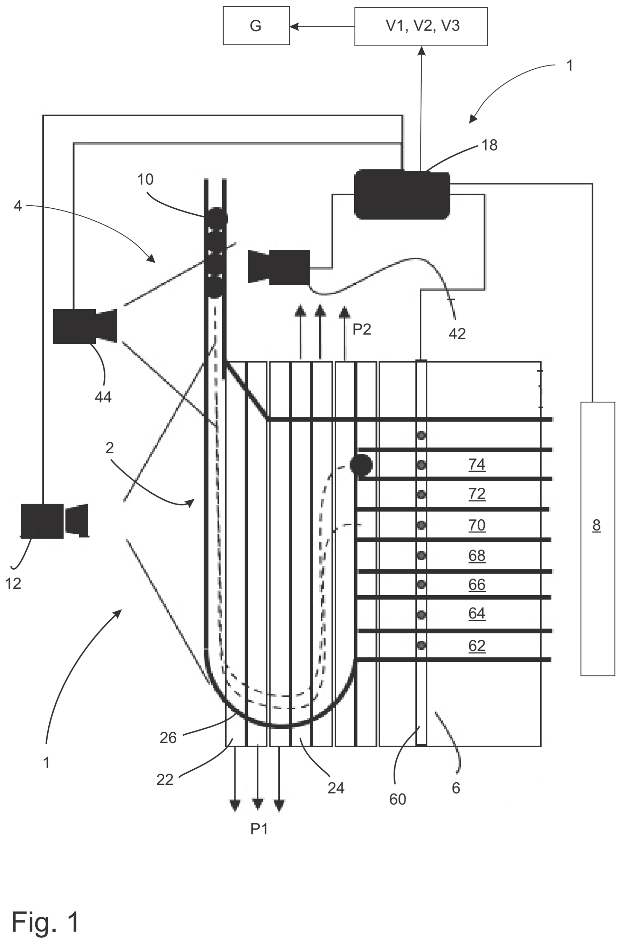

Fig. 1 zeigt eine schematische Darstellung einer erfindungsgemäßen Vorrichtung 1 zum Reinigen von Behältnissen 10. Dabei werden Behältnisse 10 in einer Reihe von einer Transporteinrichtung 2, hier einem Transportband oder einer Transportkette transportiert.

Das Bezugszeichen 4 kennzeichnet in seiner Gesamtheit eine Inspektionseinrichtung zum Inspizieren dieser Behältnisse. Diese Inspektionseinrichtung weist eine Bildaufnahmeeinrichtung 42 auf, welche die einzelnen Behältnisse inspiziert und insbesondere ortsaufgelöste Bilder der einzelnen Behältnisse 10 aufnimmt.

Die aufgenommenen Bilder werden zu einer Prozessoreinrichtung 18 weitergeleitet, welche bevorzugt die jeweiligen Bilder auswertet. Aus dieser Auswertung der Bilder ermittelt die Prozessoreinrichtung einen Wert, der für einen Verschmutzungsgrad eines Inspizierten Behältnisses charakteristisch ist.

Die Bezugszeichen 12 und 44 kennzeichnen weitere Bildaufnahmeeinrichtungen, die hier zur Behältniserkennung dienen. Diese nehmen ebenfalls Bilder der einzelnen Behältnisse auf, um diese eindeutig zu identifizieren. Dabei werden weiterhin die so identifizierten Behältnisse jeweils mit den Inspektionsergebnissen bzw. den von der Bildaufnahmeeinrichtung 42 aufgenommenen Bildern verknüpft.

Die Transporteinrichtung 2 weist hier mehrere Transportbänder 22,24 auf, wobei sich die Transportbänder 22 in Richtung der Pfeile P1 bewegen und die Transportbänder 24 in Richtung der Pfeile P2, d.h. in entgegengesetzter Richtung.

Durch ein Verschieben der Verteilungseinrichtung 26 können die Behältnisse so transportiert werden, dass sie wahlweise auf mehrere Transportgassen bzw. Reinigungsbereiche 62, 64, 66, 68, 70,72 und 74, der in ihrer Gesamtheit mit sechs bezeichneten Reinigungseinrichtung verteilt werden können.

Das Bezugszeichen 60 kennzeichnet schematisch eine Spritzdüsenanordnung. Die einzelnen Spritzdüsen werden ebenfalls von der zentralen Steuerungseinrichtung 18 individuell angesteuert. Auf diese Weise ist eine individuelle Reinigung der einzelnen Behältnisse möglich. Diese kommen individualisiert in den einzelnen Reinigungsgassen 62-74 an.

Bevorzugt kommen die Behältnisse von einem Transportband und werden dann in die Einzelgassen gedrängelt. Das erfolgt bevorzugt noch außerhalb der Reinigungseinrichtung und bevorzugt im Zulauf. Dann werden die Behältnisse bevorzugt über einen Finger in die Zellen gehoben und sind in der Maschine. Erst in der Maschine beginnt die Reinigung und somit auch die ersten Spritzungen

Das Bezugszeichen 8 kennzeichnet grob schematisch eine weitere Inspektionseinrichtung zum Inspizieren der nunmehr gereinigten Behältnisse. Auch mittels dieser Inspektionseinrichtung 8 können die Reinigungsergebnisse der einzelnen Behältnisse überprüft werden. Auch diese Ergebnisse werden bevorzugt an die Steuerung oder Prozessoreinrichtung 18 weitergeleitet, welche entsprechend die Reinigungseinrichtung 6 individuell ansteuern kann.

Die Prozessoreinrichtung gibt die für die jeweiligen Verschmutzungsgrade charakteristischen Werte V1, V2, V3 aus. Weiterhin ist es möglich, dass auf Basis dieser Verschmutzungsgrade ein Gesamtverschmutzungsgrad G für jedes Behältnis ermittelt wird.

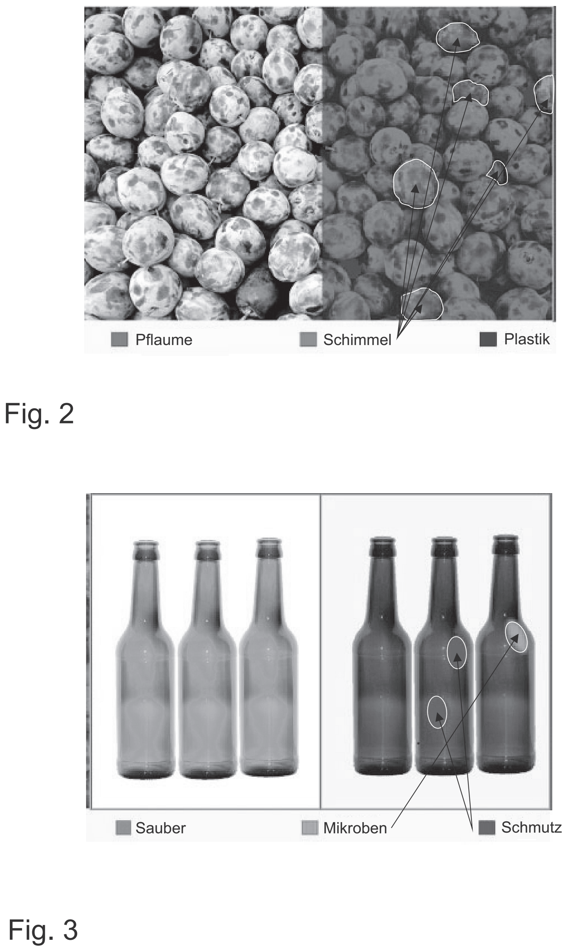

Die Figuren 2 und 3 zeigen Gegenüberstellungen von Bildern, welche einmal mit einer herkömmlichen Bildaufnahmeeinrichtung aufgenommen wurden und einmal mithilfe einer Hyperspektralkamera. Man erkennt dabei jeweils an dem rechten Bild, welches mithilfe einer Hyperspektralkamera aufgenommen wurde, dass eine wesentlich deutlichere Unterscheidung der verschiedenen Elemente möglich ist, beispielsweise hier einzelner Pflaumen (pink im rechten Teilbild von Fig. 3a, einzelner Formteile (grün im rechten Teilbild von Fig. 3a) und (blau im rechten Teilbild von Fig. 3a). Dabei ist insbesondere auch Eine Unterscheidung zwischen Gut- und Schlecht möglich, da die Hyperspektralkamera auch verdorbene Pflaumen und Druckstellen erkennen kann. Sie erkennt folglich Unterschiede, welche mit bloßem Auge nicht erkennbar sind

In Fig. 3 sind Bilder von Behältnissen gegenübergestellt. In Figur A sind dabei Behältnisse gezeigt, die mit einer herkömmlichen Bildaufnahmeeinrichtung aufgenommen wurden. Demgegenüber zeigt das rechte Teilbild in Figur 3 auch Schmutz (blau) sowie mikrobiologische Belastungen (grün). Durch die Hyperspektralanalyse sind diese beiden Gattungen an Verschmutzungen auch unterscheidbar.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Reinigen von Behältnissen (10), wobei Behältnisse (10) mittels einer Transporteinrichtung (2) transportiert und einer Reinigungseinrichtung (4) zum Reinigen der Behältnisse zugeführt werden und diese Reinigungseinrichtung (6) die Behältnisse (10) insbesondere durch Beaufschlagung der Behältnisse mit einem fließfähigen Reinigungsmittel reinigt,
**dadurch gekennzeichnet, dass**
die zu reinigenden Behältnisse (10) inspiziert werden, und wenigstens ein erster Wert (V1, V2, V3) ermittelt wird, der für einen Verschmutzungsgrad eines inspizierten Behältnisses (10) oder einen Verschmutzungsgrad einer Gruppe von inspizierten Behältnissen charakteristisch ist und die Reinigungseinrichtung (6) die zu reinigenden Behältnisse (10) oder die zu reinigenden Gruppen von Behältnisse unter Berücksichtigung des ersten Wertes (V1, V2, V3) reinigt, wobei unterschiedlich verschmutzte Behältnisse (10) unterschiedlich gereinigt werden.

2. Verfahren nach Anspruch 1,
**dadurch gekennzeichnet, dass**
jedes Behältnis (10) inspiziert wird und für jedes Behältnis (10) der für den Verschmutzungsgrad charakteristische Wert (V1, V2, V3) bestimmt wird.

3. Verfahren nach Anspruch 2,
**dadurch gekennzeichnet, dass**
jedem inspizierten Behältnis (10) der wenigstens einem charakteristische Wert (V1, V2, V3) zugeordnet wird.

4. Verfahren nach wenigstens einem der vorangegangenen Ansprüche,
**dadurch gekennzeichnet, dass**
zum Zwecke der Inspektion mittels einer Bildaufnahmeeinrichtung (42) wenigstens ein Bild und bevorzugt mehrere Bilder des oder der Behältnisse (10) aufgenommen werden und bevorzugt durch eine Auswertung des oder der Bilder der für den Verschmutzungsgrad charakteristische Wert (V1, V2, V3) ermittelt wird.

5. Verfahren nach wenigstens einem der vorangegangenen Ansprüche,
**dadurch gekennzeichnet, dass**
wenigstens ein zweiter Wert (V2) ermittelt wird, der für einen Verschmutzungsgrad eines inspizierten Behältnisses (10) oder einen Verschmutzungsgrad einer Gruppe von inspizierten Behältnissen charakteristisch ist.

6. Verfahren nach wenigstens einem der vorangegangenen Ansprüche,
**dadurch gekennzeichnet, dass**
unter Berücksichtigung mehrerer für den Verschmutzungsgrad der Behältnisse (10) charakteristischer Werte (V1, V2, V3) ein für einen Gesamtverschmutzungsgrad (G) des oder der Behältnisse (10) charakteristischer Wert bestimmt wird und bevorzugt die Reinigung der Behältnisse in Abhängigkeit von diesem für den Gesamtverschmutzungsgrad (G) charakteristischen Wert durchgeführt wird.

7. Verfahren nach wenigstens einem der vorangegangenen Ansprüche,
**dadurch gekennzeichnet, dass**
die unterschiedliche Reinigung unterschiedlicher Behältnisse (10) dadurch bewirkt wird, dass wenigstens ein für einen Reinigungsvorgang charakteristischer Reinigungsparameter für unterschiedliche Behältnisse geändert wird,
wobei bevorzugt dieser Reinigungsparameter aus einer Gruppe von Reinigungsparametern ausgewählt ist, welche eine Temperatur eines Reinigungsmittels, einen Druck eines Reinigungsmittels, eine Zusammensetzung eines Reinigungsmittels, eine Zeitdauer einer Reinigung mit dem Reinigungsmittel, und eine Konzentration eines Reinigungsmittels in einer Reinigungsflüssigkeit enthält.

8. Verfahren nach wenigstens einem der vorangegangenen Ansprüche,
**dadurch gekennzeichnet, dass**
die Reinigungseinrichtung eine Vielzahl von Reinigungsbereichen (62,64,66,68,70,72) aufweist, durch welchen die Behältnisse (10) wahlweise transportiert werden können und bevorzugt ein Reinigungsbereich (62,64,66,68,70,72) in Abhängigkeit von dem Verschmutzungsgrad ausgewählt wird.

9. Verfahren nach wenigstens einem der vorangegangenen Ansprüche,
**dadurch gekennzeichnet, dass**
die Behältnisse (10) mittels mehrerer Bildaufnahmeeinrichtungen inspiziert werden.

10. Vorrichtung zum Reinigen von Behältnissen (10), mit einer Transporteinrichtung (2), welche dazu geeignet ist, die Behältnisse (10) zu einer Reinigungseinrichtung (6) zum Reinigen der Behältnisse (10) zu transportieren wobei diese Reinigungseinrichtung (6) dazu geeignet und bestimmt ist die Behältnisse (10) insbesondere durch Beaufschlagung der Behältnisse (10) mit einem fließfähigen Reinigungsmittel zu reinigen,
**dadurch gekennzeichnet, dass**
die Vorrichtung (1) eine in der Transportrichtung der Behältnisse (10) vor der Reinigungseinrichtung (6) angeordnete Inspektionseinrichtung (4) aufweist, welche dazu geeignet und bestimmt ist, die zu reinigenden Behältnisse (10) zu inspizieren, und wenigstens ein erster Wert (V1, V2, V3) ermittelbar ist, der für einen Verschmutzungsgrad eines inspizierten Behältnisses (10) oder einen Verschmutzungsgrad einer Gruppe von inspizierten Behältnissen (10) charakteristisch ist und die Reinigungseinrichtung (6) dazu geeignet und bestimmt ist, die zu reinigenden Behältnisse (10) oder die zu reinigenden Gruppen von Behältnissen (10) unter Berücksichtigung des Wertes (V1) reinigen, wobei unterschiedlich verschmutzte Behältnisse (10) unterschiedlich reinigbar sind.

11. Vorrichtung nach dem vorangegangenen Anspruch,
**dadurch gekennzeichnet, dass**
die Vorrichtung eine Zuordnungseinrichtung (18) aufweist, welche jedem inspizierten Behältnis (10) wenigstens einen Messwert zuordnet, der für den Verschmutzungsgrad dieses Behältnisses charakteristisch ist.

12. Vorrichtung (1) nach wenigstens einem der vorangegangenen Ansprüche,
**dadurch gekennzeichnet, dass**
die Inspektionseinrichtung wenigstens eine und bevorzugt mehrere Bildaufnahmeeinrichtungen aufweist, welche dazu geeignet und bestimmt sind, ortsaufgelöste Bilder von den zu inspizierenden Behältnissen aufzunehmen.

13. Vorrichtung (1) nach wenigstens einem der vorangegangenen Ansprüche,
**dadurch gekennzeichnet, dass**
die Reinigungseinrichtung (6) mehrere Reinigungsbereiche (62,64,66,68,70,72) ausbildet, denen die zu reinigenden Behältnisse wahlweise zuführbar sind, wobei bevorzugt diese wahlweise Zuführung in Abhängigkeit von einem Verschmutzungsgrad der Behältnisse (10) durchführbar ist.

14. Vorrichtung (1) nach wenigstens einem der vorangegangenen Ansprüche,
**dadurch gekennzeichnet, dass**
die Vorrichtung eine Identifikationseinrichtung (12, 44) aufweist, welche dazu geeignet und bestimmt ist, einzelne Behältnisse (10) zu identifizieren, wobei diese Identifikationseinrichtung bevorzugt eine Bildaufnahmeeinrichtung (12, 44) aufweist, welche dazu geeignet und bestimmt ist, ein ortsaufgelöstes Bild eines Behältnisses aufzunehmen.
